**Europäisches Patentamt**

**European Patent Office**

**Office européen des brevets**

(11) Veröffentlichungsnummer : **0 190 097**
**B1**

(19)

(12) **EUROPÄISCHE PATENTSCHRIFT**

(45) Veröffentlichungstag der Patentschrift :
27.07.88

(51) Int. Cl.⁴ : **B 09 B   3/00**, B 01 J 20/20

(21) Anmeldenummer : 86810022.3

(22) Anmeldetag : 17.01.86

(54) Verfahren zum Aufarbeiten von Abfallstoffen bei der Herstellung von Kohlenstoffelektroden und entsprechendes Adsorbens.

(30) Priorität : 25.01.85 CH 343/85

(43) Veröffentlichungstag der Anmeldung :
06.08.86 Patentblatt 86/32

(45) Bekanntmachung des Hinweises auf die Patenterteilung : 27.07.88 Patentblatt 88/30

(84) Benannte Vertragsstaaten :
CH DE FR IT LI NL

(56) Entgegenhaltungen :
DE-A- 3 131 959
FR-A-   319 025
FR-A- 2 493 180
GB-A- 2 056 425
US-A- 1 346 349

(73) Patentinhaber : SCHWEIZERISCHE ALUMINIUM AG

CH-3965 Chippis (CH)

(72) Erfinder : Keller, Felix
Jan Matthijssenlaan 12
NL-3232 ED Brielle (NL)
Erfinder : Kooijman, Ary
Kruizemunt 10
NL-3181 RL Rozenburg (NL)
Erfinder : Engelsman, Robert
Parnassialaan 3
NL-3222 VJ Ostvorne (NL)
Erfinder : Fischer, Werner
Solitude
CH-3960 Venthône (CH)

EP 0 190 097 B1

**Beschreibung**

Die Erfindung bezieht sich auf ein Verfahren zum Aufarbeiten von festen, flüssigen und gasförmigen Abfallstoffen, die bei der Herstellung von Kohlenstoffelektroden anfallen, und auf ein Adsorbens für Trockenadsorptionsanlagen zur Reinigung von Rauchgasen aus Anlagen zur Herstellung von Kohlenstoffelektroden.

In industriellem Rahmen gefertigte Kohlenstoffelektroden, insbesondere Anoden für die Herstellung von Aluminium mittels Schmelzflusselektrolyse, werden aus Petrolkoks, Anodenresten und Pech hergestellt. Diese Grundstoffe werden nach dem Trocknen, Mahlen, Sieben und Mischen zu Blöcken von beispielsweise 400-1 200 kg Gewicht geformt. In einem Brennprozess bei etwa 1 100 °C werden die Elektroden gebrannt.

Bei der Herstellung von Kohlenstoffelektroden entstehen auf verschiedenen Prozesstufen feste, flüssige und/oder gasförmige Abfallstoffe. Anhand des Beispiels von Anoden für die Aluminiumindustrie seien folgende Beispiele genannt :

— Abfall bei der Anodenrestenreinigung : Grob- und feinkörniger Kohlenstoff, vermischt mit Tonerde, Kryolith, Eisen und Silizium.

— Stäube bei Umschlagsoperationen : Feinkörniger Petrolkoks mit schwankenden Anteilen von Tonerde, Silizium, Eisen und anderen Verunreinigungen mit zum Teil beträchtlichen Anteilen an Schwefel.

— Teer- und ölartige Substanzen.

— Gasförmige Emissionen : nicht-kondensierte Kohlenwasserstoffe, Fluoride und Schwefeldioxid.

Bis heute werden diese Abfallströme üblicherweise rezirkuliert, verbrannt und/oder emittiert.

Zur Rezirkulation werden insbesondere elektrostatische Filter eingesetzt, welche die Abscheidung von teer- und ölartigen Substanzen aus den Rauchgasen der Elektrodenbrennöfen bewirken. Stäube werden auch durch geeignete Gewebefilter aus dem Luftstrom abgetrennt und der Wiederverwendung zugeführt. Die durch Rezirkulation gewonnenen Materialien können sich jedoch auf die Produktequalität und -konstanz nachteilig auswirken. Die Entsorgung durch Verbrennen von Abfallprodukten bei Dritten, die Deponie oder die direkte Emission führen zu hohen Kosten, da immer strengere behördliche Vorschriften zu erfüllen sind.

Es ist eine Trockengasreinigungsanlage mit Aluminiumoxid als Adsorbens vorgeschlagen worden, welches insbesondere die Fluor- bzw. Fluorid- und Teerrückstände entfernen soll. Mit einem derartigen Adsorptionsmittel werden wohl, wie dies aus der Aluminiumelektrolyse bekannt ist, die fluor- und teerhaltigen Komponenten entfernt, jedoch nicht Schwefel bzw. schwefelhaltige Komponenten.

Der Einsatz von Aluminiumoxid als Adsorbens für die Reinigung von Rauchgasen aus Anlagen zur Herstellung von Kohlenstoffelektroden hat insbesondere zwei Nachteile :

— Es können nicht alle Abfallstoffe adsorbiert werden, die bei der Elektrodenherstellung anfallen und die Umwelt belasten.

— Wegen der grossen benötigten Aluminiumoxidmengen muss eine Hütte zur Herstellung von Aluminium in der Nähe sein. Selbst wenn dies der Fall ist, bedeutet mit Teerrückständen verschmutzte Tonerde ein bedeutender Nachteil für deren Folgeoperationen.

Die Erfinder haben sich deshalb die Aufgabe gestellt, ein Verfahren zum Aufarbeiten von festen, flüssigen und gasförmigen Abfallstoffen, die bei der Herstellung von Kohlenstoffelektroden anfallen, zu schaffen, das wirtschaftlich arbeitet und sich nicht nachteilig auf Produktequalität und -konstanz auswirkt. Weiter soll ein Adsorbens für Trockenadsorptionsanlagen zur Reinigung von Rauchgasen aus Anlagen zur Herstellung von Kohlenstoffelektroden gefunden werden, das alle Komponenten entfernt, die in einer Anlage zur Herstellung von Kohlenstoffelektroden anfallen.

In bezug auf das Verfahren wird die Aufgabe erfindungsgemäss dadurch gelöst, dass

— die festen Elektrodenabfälle mit den kohlenstoffhaltigen Stäuben der Umschlagsoperationen und mit Kalk bzw. mit Kalk und Gips (aus einer Nassreinigungsstufe) vermischt, durch Mahlen und Sichten auf eine geeignete, feinkörnige Granulometrie gebracht und als Adsorbens kontinuierlich durch eine Trockenadsorptionsanlage geführt werden,

— die gasförmigen Abfallstoffe, welche auch flüssige Anteile enthalten, durch das Adsorbens dieser Trockenadsorptionsanlage geleitet werden,

— das beladene Adsorbens, zusammen mit ölhaltigen Abfällen, in einem Niedertemperatur-Fluidbettkessel verbrannt wird, und

— die Asche bzw. Schlacke einer Deponie zugeführt wird.

Selbstverständlich können die festen Elektrodenabfälle vorerst gemahlen und dann mit den kohlenstoffhaltigen Stäuben der Umschlagsoperationen und dem Kalk bzw. dem Kalk und Gips vermischt werden, ohne dass sich am weiteren erfindungsgemässen Verfahrensablauf etwas ändert.

Bei Anwesenheit von freier oder gebundener Feuchtigkeit (Kalkmilch, gelöschter Kalk) kann $SO_2$ mit Kalk unter Bildung von Gips reagieren.

Die Belastung der Trockenadsorptionsanlage kann bedeutend vermindert werden, wenn ein Elektrofilter vorgeschaltet wird. Betriebserfahrungen haben gezeigt, dass im Elektrofilter die Hauptmenge von kondensierten Teer- und Oelrückständen abgeschieden wird, wobei der Wirkungsgrad von Elektrofiltern für die genannten Stoffe üblicherweise etwa 95 % beträgt.

Nach dem erfindungsgemässen Verfahren wird das beladene Adsorbens nicht in den Produktionskreislauf zurückgeführt, sondern in einem Niedertemperatur-Fluidbettkessel verbrannt. Diese Kessel arbeiten vorzugsweise bei Temperaturen von etwa 800- 900 °C. Die erzeugte Energie wird zur Wärme- und/oder Stromproduktion mittels Dampf verwertet. Die dem Niedertemperatur-Fluidbettkessel entnommene Asche bzw. Schlacke kann in jeder Industriedeponie problemlos gelagert werden.

Das im erfindungsgemässen Verfahren eingesetzte Adsorbens hat eine Korngrösse von Filterstaubqualität, bei welcher 95 % der Partikel eine Korngrösse von weniger als 100 μm haben. Der Gehalt des Kalks im Adsorbens liegt vorzugsweise zwischen 1 und 8, insbesondere 1 und 5 Gew.- %, je nach Schwefelgehalt. Der Kalk kann, als Kalkmilch, gelöscht oder ungelöscht eingesetzt werden. Nach dem Verbrennen des beladenen Adsorbens entsteht Kalziumsulfat und Kalziumfluorid, beides völlig unbedenkliche Rückstände.

Zusätzlich zum Kalk bzw. Kalk und Gips kann dem Adsorbens noch Braun- und/oder Holzkohlenstaub zugemischt werden.

Falls die Trockenadsorptionsanlage zwei Reaktoren hat, können die Kohleabfälle (gemahlene Elektrodenabfälle und kohlenstoffhaltige Stäube der Umschlagsoperationen) in einem ersten und der Kalk, gegebenenfalls gemischt mit weiteren Zusatzstoffen, in einem zweiten Reaktor zugegeben werden.

Generell ist das erfindungsgemässe Adsorbens für Trockenadsorptionsanlagen zur Reinigung von Rauchgasen aus Anlagen zur Herstellung von Kohlenstoffelektroden dadurch gekennzeichnet, dass es aus feinkörnig gemahlenen Elektrodenabfälle, kohlenstoffhaltigen Stäuben aus Umschlagsoperationen und aus Kalk bzw. Kalk und Gips besteht. Der Kalkanteil liegt vorzugsweise bei 1 bis 8, insbesondere bei 1 bis 5 Gew.- %. Weiter kann das Adsorbens zusätzlich Braun- und/oder Holzkohlenstaub enthalten. Vom sehr feinkörnigen Adsorbens haben vorzugsweise 95 % der Partikel eine Korngrösse von weniger als 100 μm.

Der/die Reaktor/en der Trockenadsorptionsanlage ist/sind gut isoliert. Die Erhaltung der notwendigen Betriebstemperatur erfolgt durch den zugeführten Rauchgasstrom, eine zusätzliche Heizung ist nicht notwendig. Die Isolation verhindert, dass der Taupunkt unterschritten wird und kostspielige Korrosionsschäden auftreten.

Mit der Erfindung werden gleichzeitig drei bedeutende Vorteile erzielt :

— Die festen Abfallströme werden auf umweltschutzgerechte Art und Weise verwertet,

— die Emissionen durch Rauchgase aus Brennöfen und Masseanlagen werden bedeutend reduziert, und

— der Heizwert der Abfallstoffe wird durch Erzeugung von Wärme und/oder elektrischem Strom genützt.

**Patentansprüche**

1. Verfahren zum Aufarbeiten von festen, flüssigen und gasförmigen Abfallstoffen, die bei der Herstellung von Kohlenstoffelektroden anfallen, dadurch gekennzeichnet, dass

— die festen Elektrodenabfälle mit den kohlenstoffhaltigen Stäuben der Umschlagsoperationen und mit Kalk bzw. Kalk und Gips vermischt, durch Mahlen und Sichten auf eine geeignete, feinkörnige Granulometrie gebracht und als Adsorbens kontinuierlich durch eine Trockenadsorptionsanlage geführt werden,

— die gasförmigen Abfallstoffe, welche auch flüssige Anteile enthalten, durch das Adsorbens dieser Trokkenadsorptionsanlage geleitet werden,

— das beladene Adsorbens, zusammen mit ölhaltigen Abfällen, in einem Niedertemperatur-Fluidbettkessel verbrannt wird, und

— die Asche bzw. Schlacke einer Deponie zugeführt wird.

2. Verfahren nach Anspruch 1, dadurch gekennzeichnet, dass der Trockenadsorptionsanlage ein Elektrofilter vorgeschaltet wird.

3. Verfahren nach Anspruch 1 oder 2, dadurch gekennzeichnet, dass die im vorzugsweise bei etwa 800-900 °C arbeitenden Niedertemperatur-Fluidbettkessel erzeugte Energie zur Wärme- und-/oder Stromproduktion benützt wird.

4. Verfahren nach einem der Ansprüche 1 bis 3, dadurch gekennzeichnet, dass ein Adsorbens einer Korngrösse von Filterstaubqualität, wobei vorzugsweise 95 % die Partikel eine Korngrösse von ≤ 100 μm haben, eingesetzt wird.

5. Verfahren nach einem der Ansprüche 1 bis 4, dadurch gekennzeichnet, dass ein Adsorbens mit einem Kalkgehalt von 1-8, vorzugsweise 1-5 Gew.- %, eingesetzt wird.

6. Verfahren nach einem der Ansprüche 1 bis 5, dadurch gekennzeichnet, dass die Elektrodenresten und Kohlenstoffstäube durch einen ersten Reaktor, Kalk bzw. Kalk gemischt mit weiteren Zusatzstoffen durch einen zweiten Reaktor der Trockenadsorptionsanlage geführt werden.

7. Adsorbens für Trockenadsorptionsanlagen zur Reinigung von Rauchgasen aus Anlagen zur Herstellung von Kohlenstoffelektroden, dadurch gekennzeichnet, dass das Adsorbens aus feinkörnig gemahlenen Elektrodenresten, kohlenstoffhaltigen Stäuben aus Umschlagsoperationen und Kalk bzw. Kalk und Gips besteht.

8. Adsorbens nach Anspruch 7, dadurch gekennzeichnet, dass der Kalkgehalt 1-8, vorzugsweise 1-5 Gew.- %, beträgt.

9. Adsorbens nach Anspruch 7 oder 8, dadurch gekennzeichnet, dass es zusätzlich Braun- und/oder Holzkohlenstaub enthält.

10. Adsorbens nach einem der Ansprüche 7 bis 9, dadurch gekennzeichnet, dass 95 % von dessen Partikel eine Korngrösse von ≤ 100 μm haben.

**Claims**

1. A method of working up solid, liquid and gaseous waste matter which arises in the production of carbon electrodes, characterized in that

— the solid waste matter from the electrodes is mixed thoroughly with the dust containing carbon from the operations of conversion and with lime or respectively lime and gypsum, brought through grinding and sifting to a suitable fine-grain granulometry and led continuously as adsorbent through a dry-adsorption plant ;

— the gaseous waste matter which also contains liquid constituents is led through the adsorbent in this dry-adsorption plant ;

— the charged adsorbent together with waste matter containing oil is burnt in a low-temperature fluid-bed vessel ; and

— the ash or slag is fed to a deposit.

2. A method as in Claim 1, characterized in that an electrostatic filter is connected before the dry-adsorption plant.

3. A method as in Claim 1 or 2, characterized in that the energy generated in the low-temperature fluid-bed vessel which works preferably at about 800-900 °C is utilized for the production of heat and/or current.

4. A method as in one of the Claims 1 to 3, characterized in that an adsorbent is used of a grain size of filter dust quality, preferably 95 % of the particles having a grain size of $\leqslant$ 100 $\mu$m.

5. A method as in one of the Claims 1 to 4, characterized in that an adsorbent is used having a lime content of 1-8, preferably 1-5 % by weight.

6. A method as in one of the Claims 1 to 5, characterized in that the electrode residues and carbon dust are led through a first reactor, (mixed with) lime or respectively lime mixed with further additives and led through a second reactor of the dry-adsorption plant.

7. An adsorbent for dry-adsorption plants for the cleaning of flue gases from plants for the production of carbon electrodes, characterized in that the adsorbent consists of electrode residues ground to a fine grainsize, dust containing carbon from operations of conversion and lime or respectively lime and gypsum.

8. An adsorbent as in Claim 7, characterized in that the lime content amounts to 1-8, preferably 1-5 % by weight.

9. An adsorbent as in Claim 7 or 8, characterized in that in addition it contains dust from brown coal and/or charcoal.

10. An adsorbent as in one of the Claims 7 to 9, characterized in that 95 % of its particles have a grain size of $\leqslant$ 100 $\mu$m.

**Revendications**

1. Procédé pour le traitement de déchets solides, liquides et gazeux qui se forment dans la fabrication d'électrodes de carbone, caractérisé en ce que

— les déchets solides d'électrodes sont mélangés avec les poussières carbonées des opérations de transbordement et avec de la chaux ou de la chaux et du gypse, amenés par broyage et tamisage à une granulométrie fine appropriée et envoyés en continu comme adsorbant à travers une installation d'adsorption à sec,

— les déchets gazeux, qui contiennent aussi des fractions liquides, sont envoyés à travers l'adsorbant de cette installation d'adsorption à sec,

— l'adsorbant chargé est brûlé en même temps que des déchets huileux dans une chaudière à lit fluide à basse température, et

— la cendre ou scorie est envoyée sur une décharge.

2. Procédé selon la revendication 1, caractérisé en ce qu'un électrofiltre est intercalé avant l'installation d'adsorption à sec.

3. Procédé selon la revendication 1 ou 2, caractérisé en ce que l'énergie produite dans la chaudière à lit fluide à basse température fonctionnant de préférence à environ 800-900 °C est utilisée pour la production de chaleur et/ou de courant.

4. Procédé selon l'une des revendications 1 à 3, caractérisé en ce que l'on utilise un adsorbant ayant une grosseur de grains de qualité de poussière à filtre, 95 % des particules ayant de préférence une granulométrie $\leqslant$ 100 $\mu$m.

5. Procédé selon l'une des revendications 1 à 4, caractérisé en ce que l'on utilise un adsorbant ayant une teneur en chaux de 1-8 % en poids, de préférence 1-5 % en poids.

6. Procédé selon l'une des revendications 1 à 5, caractérisé en ce que les résidus d'électrodes et les poussières carbonées sont envoyés dans un premier réacteur, la chaux ou la chaux mélangée avec d'autres additifs est envoyée à travers un second réacteur de l'installation d'adsorption à sec.

7. Adsorbant pour installations d'adsorption à sec pour la purification de gaz de fumée d'installations pour la fabrication d'électrodes de carbone, caractérisé en ce que, l'adsorbant consiste en résidus d'électrodes, poussières carbonées d'opérations de transbordement et chaux ou chaux et gypse finement broyés.

8. Adsorbant selon la revendication 7, caractérisé en ce que la teneur en chaux est de 1-8 % en poids, de préférence 1-5 % en poids.

9. Adsorbant selon la revendication 7 ou 8, caractérisé en ce qu'il contient en outre de la poussière de lignite ou de charbon de bois.

10. Adsorbant selon l'une des revendications 7 à 9, caractérisé en ce que 95 % de ces particules ont une granulométrie $\leqslant$ 100 $\mu$m.